# EUROPEAN PATENT APPLICATION

(11) **EP 3 699 757 A1**
(43) Date of publication of application: **26.08.2020**
(21) Application number: 19204297.6
(22) Date of filing: 21.10.2019
(51) Int. Cl.: G06F 9/455, G06F 9/48, G06F 9/50

(54) **SYTSTEM AND METHOD FOR GRADUALLY SWITCHING COMPUTER ENVIRONMENTAL BETWEEN LOCAL COMPUTER AND REMOTE COMPUTER**

(30) Priority: 19.10.2018 PT 2018115089
(71) Applicant: Eurotux Informatica S.A., 4750-127 Barcelos (PT)
(72) Inventor: ROQUE NASCIMENTO PEREIRA, José Orlando, 4710-057 Braga (PT); PINTO FERREIRA DE SOUSA, ANTÓNIO LUÍS, 4575-375 PINHEIRO PNF (PT); PINHEIRO COUTINHO, ANTÓNIO JOSÉ, 4750-127 ARCOZELO BCL (PT); PAIS FERNANDES, NUNO MIGUEL, 4780-490 SANTO TIRSO (PT)
(74) Representative: Patentree

(57) **Abstract**

System and method for gradually switching computing environment comprising a local computer (100) and one or more remote computers, designated remote cloud (200), to be connected by a communication network (900), the system comprising: a remote virtual machine (202) housed in a remote hypervisor (201); a local virtual machine (102) housed in a local hypervisor (101); a remote computing environment remote server (206); a remote computing environment local server (106); a remote computing environment local client (107); a remote disk controller (203); a local disk controller (103); a local agent and respective interface (110) for instantiating and controlling the remaining local components; a remote agent (210) for instantiating and controlling the remaining remote components; a network tunnel client (105) and a network tunnel server (205); a boot controller (104) for restarting the local computer.

## Description

### Technical Domain

The present description relates to a system and method for gradually switching computing environment between local computer and one or more remote computers, designated computing cloud, accessed by a communication network, wherein the computing environment includes operating system and running applications. The present description therefore relates to the provisioning and management supported by cloud computing infrastructures accessed through computer communication networks.

### Background Art

Personal computing environments are the most common support for personal and business productivity applications. A personal computing environment includes an operating system, with its user interface and associated tools, and a varying set of applications dependent on specific user needs.

A key feature of personal computing environments is the ability to satisfy different users through different combinations of applications and utilities, but also specialized hardware components such as for example high-performance graphics cards and various devices plugged in USB bus. This diversity, however, makes it difficult to manage large parks of personal computing environments.

In institutions with large numbers of users, it is important to manage and provision the park of personal computing environments in order to ensure an efficient use of resources, maintenance of security standards and application availability.

The traditional approach to centrally managing this is to use desktop environment installation systems, which allow storing a master copy of the computing environment and transfer it to personal computers via a pre-boost running environment.

In addition to allowing the master copy to be centrally updated, this approach also allows the reuse of personal computers by different users and with different desktop environments. However, upgrading or changing the desktop environment implies unloading large amounts of data, leading to a period of unavailability.

Alternatively, there is also the management of personal computing environments through a cloud computing infrastructure. To this end, personal computing environments are run on virtual machines on an infrastructure as a service in a data center, which may be public or private, and accessed through a remote desktop environment presentation protocol.

This approach has the advantage of allowing access to the computing environment through a variety of devices, from personal computers to mobile phones, allowing for centralized management of the computing environments and the resources they use and providing guarantees of reliability even when the personal computer is lost or destroyed. However, it has the disadvantage that it does not allow the use of specialized hardware resources on personal computers and requires a constant network connection of adequate quality.

These facts are described in order to illustrate the technical problem solved by the embodiments of the present document.

### General Description

A system and method are described for gradually switching computing environment between local computer and one or more remote computers, designated computing cloud, accessed by a communication network, wherein the computing environment includes operating system and running applications.

More particularly a computer-implemented system and method are described for the gradual switching of personal computing environments, including the operating system and running applications, between: (i) a computing cloud accessed by a communication network with a remote presentation protocol; and (ii) a personal computer that can operate off the network and taking advantage of its hardware resources. The switching method is characterized by: (i) the use of a hypervisor on the personal computer only during switching; (ii) incremental and background copying of data stored on disk and in memory to and from the computing cloud; (iii) coordinating the hypervisor with the copy mechanisms to provide gradual switching with a unified user interface.

One of the aspects of the present invention refers to a system and method for gradually switching computing environment comprising a local computer and one or more remote computers, designated remote cloud, to be connected by a communication network, the system comprising: a remote virtual machine housed in a remote hypervisor; a local virtual machine housed in a local hypervisor; a remote computing environment remote server; a remote computing environment local server; a remote computing environment local client; a remote disk controller; a local disk controller; a local agent and respective interface for instantiating and controlling the remaining local components; a remote agent for instantiating and controlling the remaining remote components; a network tunnel client and a network tunnel server; a boot controller for restarting the local computer.

This description proposes a system that combines the operating modes of centralized installation systems with virtualization systems in the cloud. This allows taking advantage of all the features of the personal computer and working offline, but also to be instantly accessed when starting a personal computer. One of the main features of the present description is the way components are combined and the method of coordinating these components in order to provide gradual switching between different operating modes.

The present description thus makes it possible to combine the advantages of pre-existing alternatives by providing switching between operating modes equivalent to both. On the one hand, the desktop environment can run in the cloud, enabling centralized management thereof, resource sharing and all guarantees of cloud reliability. On the other hand, it allows the use of the personal computer and all its resources, even when disconnected from the network, when the desktop environment is switched thereto.

Briefly, the proposed system and method allow, in particular, the following use scenario. A user starts a personal computer, which has no previously loaded desktop environment, with the proposed system, for example using a movable storage medium or a network-loaded pre-run system. The main component that is activated is an agent that controls the operating modes and makes the connection to the cloud. This system gives access to cloud desktop environments management, which one can instantly connect to via remote presentation.

However, unlike a traditional cloud desktop environment management system, the user has an Operating Mode Control that allows to control the gradual switching to a local desktop installation and operation, while the system is still in use. In a first step, the control triggers synchronization from remote desktop environment storage to personal computer storage. This synchronization is incremental and modified data is transferred since the last connection, and it occurs in the background, not interrupting the use of the environment. The status of this synchronization is displayed through an Operation Availability Indicator.

In a second step the migration of the virtual machine containing the hypervisor desktop environment in cloud to a hypervisor on the personal computer is triggered. This synchronization mostly takes place in the background too, with a short interruption to its completion and the connection of the remote presentation to the now local virtual machine. In this operating mode, either local storage or remote storage may be used depending on the state of synchronization. A network component creates a tunnel between the personal computer and the cloud so that network connections that were in progress are not interrupted.

Having the virtual machine running on the personal computer and synchronized storage, it is possible in a third step to turn off the personal computer from the cloud. This means that the contents of local storage begin to diverge from cloud replica. But on the other hand, it allows operation off the network or connected to high cost or low speed networks. By commanding the return to the turned-on operating mode, the cloud storage replica is synchronized by copying changes made to the personal computer during the period when it was turned off.

In cloud off mode, wherein the desktop environment still runs on a virtual machine under hypervisor command on the personal computer, it is possible to command the switch to native execution without the use of a hypervisor. To this end, local storage that was controlled by the synchronization and replication component is now exposed as a normal partition. A boot loader is then used to command the restart of the personal computer with the desktop environment. This step interrupts network connections and ongoing applications.

A method is described for gradually switching a user's computing environment between a personal computer (100), or interchangeably a local computer, and one or more remote computers (200), or interchangeably a cloud or computing cloud, connected by a communication network (900), comprising the steps of:
establishing a data connection between the local computer (100) and the remote computer or computers (200), initializing a remote computing environment local client (107) on the local computer (100), establishing a connection between the remote computing environment local client (107) and a remote computing environment remote server (206) on the remote computer or computers (200),
wherein the remote computing environment remote server (206) gives access to a remote virtual machine (202) housed in a remote hypervisor (201) on the remote computer or computers (200), and configuring a remote disk controller (203) on the remote computer or computers (200) for access by said remote virtual machine (202);
enabling a local disk controller (103) on the local computer (100), establishing a connection between the local disk controller (103) and the remote disk controller (203), and initiating data synchronization from the remote disk controller (203) to the local disk controller (103);
running a local virtual machine (102) housed in a local hypervisor (101) on the local computer (100), configuring said local virtual machine (102) to access the remote disk controller (203), migrating the remote virtual machine (202) to the local virtual machine (102), and connecting the remote computing environment local client (107) to a remote computing environment local server (106) that gives access to the local virtual machine (102);
when remote disk controller (203) and local disk controller (103) are synchronized, configuring said local virtual machine (102) to access local disk controller (103), and maintain local disk controller data synchronization (103) for the remote disk controller (203);
terminating connection between local disk controller (103) and remote disk controller (203), and terminating data connection between local computer (100) and remote computer or computers (200).

An embodiment further comprises configuring a boot controller (104) of the local computer (100) to restart the local computer (100) in a local computing environment, that is, without using the local hypervisor (101).

In one embodiment the transition between said steps is at the user's initiative, the system's initiative or the user's initiative under system permission.

In one embodiment data synchronization from the remote disk controller

(203) to the local disk controller (103) is performed in the background.

In one embodiment, migration between the remote virtual machine (202) to the local virtual machine (102) is performed in the background.

In one embodiment the transition of the remote computing environment local client (107) from the remote computing environment remote server (206), which gives access to the remote virtual machine (202), to the remote computing environment local server (106) which gives access to the local virtual machine (102), is performed on the foreground.

A method is also described for gradually switching a user's computing environment between one or more remote computers (200) and a local computer (100) connected by a communication network (900), comprising the steps of:
running a local virtual machine (102) housed in a local hypervisor (101) on the local computer (100), configuring said local virtual machine (102) to access a local disk controller (103) on the local computer (100) and connecting a remote computing environment local client (107) on the local computer (100) to a remote computing environment local server (106) giving access to the local virtual machine (102);
running a remote virtual machine (202) housed in a remote hypervisor (201) on the remote computer or computers (200), and configuring said remote virtual machine (202) to access a remote disk controller (203) on the remote computer or computers (200) for access by said remote virtual machine (202);
establishing a data connection between the local computer (100) and the remote computer or computers (200), establishing a connection between the local disk controller (103) and the remote disk controller (203), and initiating data synchronization from the local disk controller (103) to remote disk controller (203);
when remote disk controller (203) and local disk controller (103) are synchronized, configuring said local virtual machine (102) to access remote disk controller (203), and maintain local disk controller data synchronization (103) for the remote disk controller (203);
migrating the local virtual machine (102) to the remote virtual machine (202) and connecting the remote computing environment local client (107) to a remote computing environment remote server (206) gives access to the remote virtual machine (202).

A non-transient data storage medium is also described comprising programming instructions for implementing a system for gradually switching a user's computing environment comprising a local computer (100) and one or more remote computers (200), wherein the programming instructions include executable instructions for executing the method according to any one of the embodiments described.

A system is also described for gradually switching a user's computing environment comprising a local computer (100) and one or more remote computers (200) to be connected by a communication network (900), configured to execute the method according to any one of the embodiments described, comprising:
a remote virtual machine (202) housed in a remote hypervisor (201) on the remote computer or computers (200);
a local virtual machine (102) housed in a local hypervisor (101) on the local computer (100);
a remote computing environment remote server (206) on the remote computer or computers (200) to access the remote virtual machine (202);
a remote computing environment local server (106) on the local computer (100) for accessing the local virtual machine (102);
a remote computing environment local client (107) on the local computer (100) to connect to the remote computing environment remote server (206) or the remote computing environment local server (106);
a remote disk controller (203) on the remote computer or computers (200) for access by said remote virtual machine (202) or by the local virtual machine (102);
a local disk controller (103) on the local computer (100) for access by the local virtual machine (102).

One embodiment comprises a boot controller (104) of the local computer (100) for restarting the local computer (100) in a local computing environment, that is, without recourse to the local hypervisor (101) or restarting the local computer (100) in a virtual computing environment, that is, using the local hypervisor (101) to run the local virtual machine (102).

One embodiment comprises a local agent and interface (110) for the user to control and display the gradual switching of computing environment between the local computer (100) and the remote computer or computers (200).

In one embodiment, the local agent and interface (110) comprise a computing environment interface (10), an operating mode control (13) for triggering user-controlled state changes, and a computing environment selector (11) for the user to choose the active and viewing computing environment.

In one embodiment, the local agent and interface (110) comprise an operating availability indicator (12) for informing on the state of data synchronization between the local disk controller (103) and the remote disk controller (203), and for informing on the state of migration between the remote virtual machine (202) and the local virtual machine (102).

In one embodiment, the local disk controller (103) abstracts one or more storage devices from the local computer (100).

One embodiment comprises a local network tunnel client (105) on the local computer (100) and a remote network tunnel server (205) on the remote computer or computers (200) to redirect data traffic from the remote computer or computers (200) to the local computer (100) by migrating a network address from the remote virtual machine (202) to the local virtual machine (102) when said network tunnel is active between the local network tunnel client (105) and the remote network tunnel server (205).

These facts are described in order to illustrate the technical problem addressed by the present description.

### Brief Description of the Figures

For an easier understanding, figures are herein attached, which represent preferred embodiments which are not intended to limit the object of the present description.
**Figure 1****:** Schematic representation of an embodiment of interface elements for the user commanding system state transition and observing the current state.
**Figure 2****:** Schematic representation of an embodiment of interface elements for the user commanding system state transition and observing the current state.

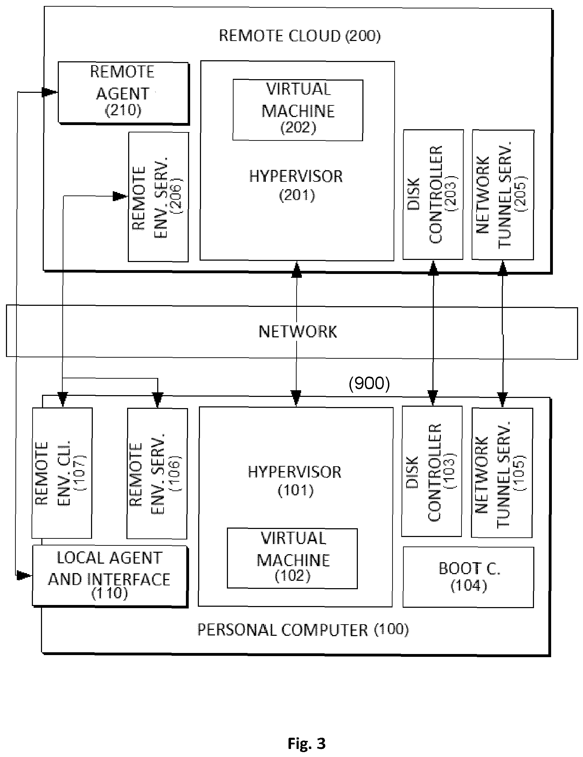

**Figure 3****:** Schematic representation of an embodiment of system functional elements and interactions thereof, with software components comprised by the system within the context of the computing cloud and the personal computer, wherein the main interactions between components are represented by arrows.
**Figure 4****:** Schematic representation of an embodiment of possible states and system transitions with possible system state table, wherein the lines correspond to user-controlled alternatives and the columns correspond to the combinations of indicators, wherein possible transitions between states are marked as arrows, wherein solid lines represent the possibility of direct command by the user and dashed lines the transitions that occur only automatically.

### Detailed Description

The present description provides for the gradual switching of a computing environment between a personal computer and the cloud in the sense that: switching is undertaken without loss of operating system and application state; and longer data copying operations are done in the background.

The present description further comprises activating sets of software components in different operating states that undertake the gradual switching of computing environments between the personal computer and the cloud. The present description also comprises the sequence of steps to be performed to effect the change between the different operating states.

The following text refers to the user interface. The switching system comprises a user interface for commanding switching and observing the current state of computing environments. The system comprises the following interface components:
the Computing Environment Interface - IAC **10** in use;
an Operating Mode Control - CMO **13**, to trigger user-controlled state changes, comprising the command modes: Remote Off - CMO-RD **301,** Remote On - CMO-RL **302,** Remote Synchronizing - CMO-RS **303,** Local Synchronizing - CMO-LS **304,** Local Off - CMO-LD **305** and Local Native - CMO-LN **306.**
an Operational Availability Indicator - IDO **12**, indicating whether, in the current state, the environment can operate on the personal computer or the cloud, or if it is in a transition state, and which comprises the operating modes: In the Cloud - IDO-NN **301**, Synchronizing Local - IDO-SL **302,** Synchronized - IDO-S **303**, Synchronizing Remote - IDO-SR **304** and Only Local - IDO-AL **305**.
a Computing Environment Selector - SAC **11**, to choose the active and viewing computing environment;

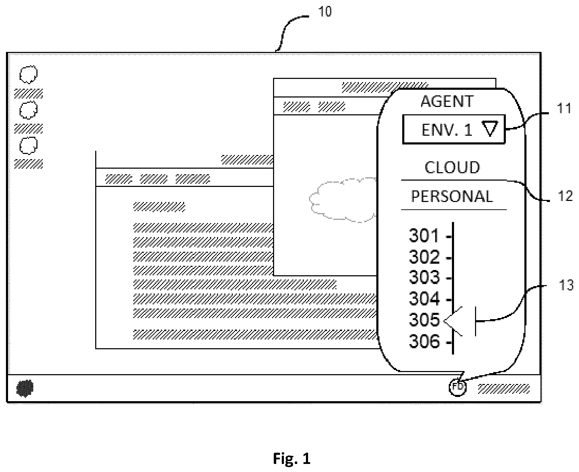

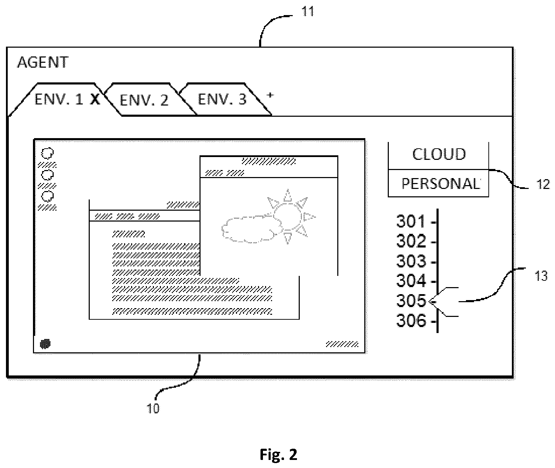

Figures 1 and 2 show two possible aspects of this interface. Components can be presented as an application or dashboard within the computing environment, or they can be part of a proprietary interface that encompasses an overview of the computing environment.

The following text refers to software components. The switching system comprises software components at two different levels: personal computer level and computing cloud level. At the Personal Computer level - CP **100,** it comprises the following software components:
a Local Agent and Interface - ALI **110,** capable of instantiating and manipulating the operating mode of the remaining software components on the personal computer;
a Personal Computer Hypervisor - HV-CP **101,** capable of running computing environments on virtual machines;
one or more Virtual Machine on Personal Computer - MV-CP **102** with virtualized access to physical computing devices;
a Remote Environment Server on the Personal Computer - SAR-CP **106,** capable of making accessible to external clients the visual state of computing environments;
a boot Controller - CA **104** that controls the restart of the personal computer,
determining the computing environment which is run;
a Disk Controller in the Personal Computer - CD-CP **103** that provides the abstraction of a replicated storage device between the personal computer and the cloud;
a Network Tunnel Client - CTR **105,** capable of redirecting data traffic to the cloud;
a Remote Environment Client - CAR **107,** capable of viewing a local or remote desktop environment running on a virtualization platform.

At the Cloud Computing level - NC **200,** it comprises the following software components:
a Remote Agent - AR **210,** capable of instantiating and manipulating the operating mode of the remaining cloud software components;
a Cloud Hypervisor - HV-N **201,** capable of running virtual machines;
one or more Virtual Machines in the Cloud - MV-N **202** running computing environments virtualizing their access to physical computing devices;
a Remote Environment Server in the Cloud - SAR-N **206,** capable of making accessible to external clients the visual state of computing environments;
a Disk Controller in the Cloud - CD-N **203** that provides the abstraction of a replicated storage device between the personal computer and the cloud;
a Network Tunnel Server - STR **205,** capable of redirecting data traffic to the personal computer.

The following text refers to interactions and relationships between components. The SAR-CP **106** and SAR-N **206** are identical server components, respectively associated with the MV-CP **102** and MV-N **202.** While there is a connection between the client component CAR **107** and one of them:
the visual aspect of the associated computing environment is sent from the server to the client;
sounds produced by the computing environment are sent from the server to the client;
the client uses the information received to keep an up-to-date presentation of the computing environment on the local screen and to play the corresponding sounds; the client captures the user's commands on the keyboard and pointing devices and sends them to the server;
the server applies and provides the computing environment with the commands received as if given locally.

In addition, the client server pair can be turned on and off without impacting the normal operation of the desktop environment.

CTR **105** and STR **205** are a client/server pair that allows a network address to be migrated between MV-CP **102** and MV-N **202.** When this client/server pair is turned off, the network address is associated with MV-N **202.** When the connection is established:
traffic destined for the migrating network address is captured by STR **205** and sent to CTR **105,** which makes it available to MV-CP **102;**
traffic originating from the migrating network address is captured by CTR **105** and sent to STR **205,** which forwards it to its final destination.

The CD-CP **103** and CD-N **203** are identical components, respectively associated with the MV-CP **102** and MV-N **202.** They operate off or on, keeping two replicas of the same information. At one time, only one of them is designated as a primary replica, the other being designated as a secondary replica that never satisfies local read or write requests. There may be parts of the information stored on disk that are not up to date on both replicas. The pair then operates in the following modes:
Off Mode:
   Read and write requests from the local disk are satisfied on the primary replica. Locally modified information, which becomes outdated on the remote replica, will need to be synchronized later. This metadata, which identifies the information to synchronize, is persistently stored on the local disk.
Synchronized Mode:
   Read requests from the local disk on the primary replica and write requests are satisfied when confirmed by the secondary replica and the primary replica local disk. The information is kept identical on both replicas.
Synchronizing Primary Mode:
   Read requests from the local disk on the primary replica, if the target is updated, and write requests are satisfied when confirmed by the secondary replica and the primary replica local disk. At the same time, the updated information in the remote replica is copied, leading to a switch to Synchronized Mode, wherein all read requests will be satisfied.
Synchronizing Secondary Mode:
   Read requests from the local disk on the primary replica and write requests are satisfied when confirmed by the secondary replica and the primary replica local disk. At the same time, the updated information in the local replica is copied, leading to a switch to Synchronized Mode.

The HV-CP **101** and HV-N **201** are identical components that manage MV-CP **102** and MV-N **202**, which run the desktop environments. When linked together, they allow the virtual machine to migrate between them without losing the state of the operating system or running applications.

ALI **110** and AR **210** command and diagnose all components, respectively, in CP **100** and NC **200.** They identify the current state of system operation and perform the necessary sequence of steps for state transitions, under the user's command and according to the state of the individual components and their connections. These components are interconnected in all states except END **301-311** and ECPD **306-315.**

The following text refers to operating states. The switching system comprises different operating states, which are characterized by the active software components and the operations they perform.

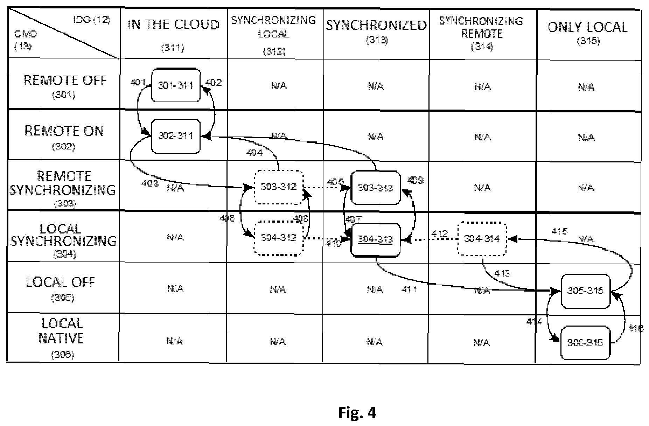

In an embodiment, the operating states and their relationship to user interface components are shown in the table form in Figure 4. In this table, each row corresponds to one of the possible selections in CMO **13.** Each column corresponds to a combination of possible modes of IDO **12.** Each state corresponds to the activity of the following components:
in END state **301-311,** components AR **210,** HV-N **201,** MV-N **202** and CD-N **203** are active;
in the ENLSS state **302-311,** components AR **210,** HV-N **201,** MV-N **202,** CD-N **203,** SAR-N **206,** ALI **110** and CAR **107** are active, wherein:
   CAR **107** is connected to SAR-N **206;**
   CD-N **203** is in primary mode and turned off;
in the ENSC state **303-312,** components AR **210,** HV-N **201,** MV-N **202,** CD-N **203,** SAR-N **206,** ALI **110,** CAR **107** and CD-CP **103** are active, wherein:
   CAR **107** is connected to SAR-N **206;**
   CD-CP **103** is in secondary mode and copying information from CD-N **203;**
   CD-N **203** is in primary mode and sending information from CD-CP **103;**
in ECPSN state **304-312,** components CD-N **203,** ALI **110,** CAR **107,** HV-CP **101,** MV-CP **102** and CD-CP **103** are active, wherein:
   CAR **107** is connected to SAR-CP **106;**
   CD-CP **103** is in primary mode and copying information from CD-N **203;**
   CD-N **203** is in secondary mode and sending information from CD-CP **103;**
in the ENLS state **303-313,** components AR **210,** HV-N **201,** MV-N **202,** CD-N **203,** SAR-N **206,** ALI **110,** CAR **107** and CD-CP **103** are active, wherein:
   CAR **107** is connected to SAR-N **206;**
   CD-CP **103** is in secondary mode;
   CD-N **203** is in primary mode;
in ECPS state **304-313,** components CD-N **203,** ALI **110,** CAR **107,** HV-CP **101,** MV-CP **102** and CD-CP **103** are active, wherein:
   CAR **107** is connected to SAR-CP **106;**
   CD-CP **103** is in primary mode;
   CD-N **203** is in secondary mode;
in ECPSC state **304-314,** components CD-N **203,** ALI **110,** CAR **107,** HV-CP **101,** MV-CP **102** and CD-CP **103** are active, wherein:
   CAR **107** is connected to SAR-CP **106;**
   CD-CP **103** is in primary mode and sending information to CD-N **203;**
   CD-N **203** is in secondary mode and receiving information from CD-CP **103;**
in ECPLSS state **305-315** components ALI **110,** CAR **107,** HV-CP **101,** MV-CP **102** and CD-CP **103** are active, wherein:
   CAR **107** is connected to SAR-CP **106;**
   CD-CP **103** is in primary mode and turned off;
in ECPD state **306-315** only the ALI **110** component is active because the computing environment is running natively on the personal computer.

In an embodiment, there are three sets of states with important common features:
the states that take full advantage of hardware features: ECPSN **304-312,** ECPS **304-313,** ECPSC **304-314,** ECPLSS **305-315,** and ECPD **306-315;**
the states in which the computing environment can be viewed and used from remote systems via computer communication networks: all but ECPD **306-315;**
redundant states and the system can be switched between the cloud and the personal computer faster: ENLS **303-313** and ECPS **304-313.**

In an embodiment, the preferred operating state is ECPS state **304-313,** which meets all these desirable characteristics.

The following text refers to transitions between operating states. The change between operating states is triggered by the user through manipulation of CMO **13** or automatically by the system and is displayed through IDO **12.** Transitions between states and their relationships with user interface components are shown in Figure 4. Each transition occurs because under the following conditions it comprises a set of steps:
the transition **401** between END **301-311** and ENLSS **302-311** state is triggered by the user via CMO **13.** This transition comprises the following sequence of operations:
   establishing the connection of ALI **110** to AR **210**;
   obtaining the configuration and connection parameters of CAR **107;**
   initializing CAR **107;**
   establishing the connection of CAR **107** to SAR-N **206.**
the transition **402** between the ENLSS **302-311** and END **301-311** state is triggered by the user through SAC **11** or automatically in case of loss of connection. This transition comprises the following sequence of operations:
   terminating the connection between CAR **107** and SAR-N **206;**
   closing CAR **107;**
   terminating the connection between ALI **110** and AR **210;**
the transition **403** between ENLSS **302-311** and ENSC **303-312** state is triggered by the user via CMO **13.** This transition comprises the following sequence of operations:
   confirming by AR **210** there is no other personal computerthat is not in END **301-311** or ENLSS **302-311** state;
   establishing the connection between CD-CP **103** and CD-N **203;**
the transition **404** between the ENSC **303-312** and ENLSS **302-311** state is triggered by the user via CMO **13** or automatically in case of error in the connection between CD-CP **103** and CD-N **203.** This transition comprises the following sequence of operations:
   terminating the connection between CD-CP **103** and CD-N **203;**
the transition **405** between ENSC **303-312** and ENLS **303-313** state is automatically triggered when CD-CP **103** is synchronized with CD-N **203.** This transition does not trigger any sequence of operations, but makes it possible to use CMO **13** to command transition **407** to ECPS state **304-313.**

The transition **410** between ECPSN **304-312** and ECPS **304-313** state is automatically triggered when CD-CP **103** is synchronized with CD-N **203.** This transition does not trigger any sequence of operations, but makes it possible to use CMO **13** to command transition **411** to ECPLSS state **305-315.**

Transition **406** between ENSC **303-312** and ECPSN **304-312** state and transition **407** between ENLS **303-313** and ECPS **304-313** state are triggered by the user via CMO **13.** These transitions comprise the following sequence of operations:
switching CD-CP **103** to Primary Mode;
migrating from MV-N **202** to MV-CP **102;**
network tunnel activation;
connecting CAR **107** to SAR-CP **106;**
switching CD-N **203** to Secondary Mode.

Transition **408** between ECPSN **304-312** and ENSC **303-312** state and transition **409** between ECPS **304-313** and ENLS **303-313** state are triggered by the user via CMO **13.** These transitions comprise the following sequence of operations:
switching CD-N **203** to Primary Mode;
migrating from MV-CP **102** to MV-N **202;**
network tunnel deactivation;
connecting CAR **107** to SAR-N **206;**
switching CD-CP **103** to Secondary Mode.

The transition **411** between ECPS **304-313** and ECPLSS **305-315** state is triggered by the user via CMO **13.** This transition comprises the following sequence of operations:
terminating the connection between CD-CP **103** and CD-N **203;**
terminating the connection between ALI **110** and AR **210.**

The transition **415** between ECPLSS **305-315** and ECPSC **304-314** state is triggered by the user via CMO **13.** This transition comprises the following sequence of operations:
establishing the connection between ALI **110** and AR **210;**
establishing the connection between CD-CP **103** and CD-N **203.**

The transition **413** between the ECPSC **304-314** and ECPLSS **305-315** state is triggered by the user via CMO **13** or automatically in case of error in the connections between CD-CP **103** and CD-N **203** and between ALI **110** and AR **210.** This transition comprises the following sequence of operations:
terminating the connection between CD-CP **103** and CD-N **203;**
terminating the connection between ALI **110** and AR **210**.

The transition **412** between ECPSC **304-314** and ECPS **304-313** state is automatically triggered when CD-CP **103** is synchronized with CD-N **203.** This transition does not trigger any sequence of operations, but makes it possible to use CMO **13** to command transition **409** to ENLS state **303-313.**

The transition **414** between ECPLSS **305-315** and ECPD **306-315** state is triggered by the user via CMO **13.** This transition comprises the following sequence of operations:
configuring of CA **104** to restart for computing environment;
closing of CP **100** and restarting;
initializing ALI **110** inside computing environment.

The transition **416** between ECPD **306-315** and ECPLSS **305-315** state is triggered by the user via CMO **13.** This transition comprises the following sequence of operations:
configuring of CA **104** to restart for HV-CP **101;**
closing of CP **100** and restarting;
initializing ALI **110** over HV-CP **101;**
initializing components CTR **105** and CD-CP **103;**
initializing the computing environment on MV-CP **102,** by initializing SAR-CP **106;**
connecting CAR **107** to SAR-CP **106.**

In the present disclosure, the following terms (glossary) are used, among others:
ALI **110** - Local Agent and Interface.
AR **210** - Remote Agent.
CA **104** - Boot Controller.
CAR **107** - Remote Environment Client.
CD-CP **103** - Disk Controller on Personal Computer.
CD-N **203** - Disk Controller in the Cloud.
CMO-LD **305** - Local Off.
CMO-LN **306** - Local Native.
CMO-LS **304** - Local Synchronizing.
CMO-RD **301** - Remote Off.
CMO-RL **302** - Remote On.
CMO-RS **303** - Remote Synchronizing.
CMO **13** - Operating Mode Control.
CP **100** - Personal Computer.
CTR **105** - Network Tunnel Client.
ECPD **306-315** - Status on Personal Computer Off.
ECPLSS **305-315** - Status on Personal Computer On with no Synchronization.
ECPS **304-313** - Status on Personal Computer Synchronized.
ECPSC **304-314** - Status on Personal Computer Synchronization In Progress.
ECPSN **304-312** - Status on Personal Computer Synchronizing From Cloud.
END **301-311** - Cloud Status Off.
ENLS **303-313** - Cloud Status On and Synchronized.
ENLSS **302-311** - Cloud Status On no Synchronization.
ENSC **303-312** - Cloud Status with Synchronization in Progress.
HV-CP **101** - Hypervisor on Personal Computer.
HV-N **201 -** Hypervisor in the Cloud.
IAC **10** - Computing Environment Interface.
IDO-AL **305** - Local Only.
IDO-NN **301-** In The Cloud.
IDO-S **303** - Synchronized.
IDO-SL **302** - Synchronizing Local.
IDO-SR **304** - Synchronizing Remote.
IDO **12** - Operation Availability Indicator.
MV-CP **102** - Virtual Machine on Personal Computer.
MV-N **202** - Virtual Machine in the Cloud.
NC **200** - Cloud Computing.
SAC **11** - Computing Environment Selector.
SAR-CP **106** - Remote Environment Server on Personal Computer.
SAR-N **206** - Remote Environment Server in the Cloud.
STR **205** - Network Tunnel Server.

The term "comprises" or "comprising" when used herein is intended to indicate the presence of the features, elements, integers, steps and components mentioned, but does not preclude the presence or addition of one or more other features, elements, integers, steps and components, or groups thereof. The embodiments described are combinable with each other.

The present description is of course in no way restricted to the embodiments described herein and a person of ordinary skill in the art can foresee many possibilities of modifying it and replacing technical features with equivalents depending on the requirements of each situation as defined in the appended claims. The following claims define further embodiments.

## Claims

1. Method for gradually switching a user's computing environment between a local computer (100) and one or more remote computers (200) connected by a communication network (900), which comprises the steps of:
establishing a data connection between the local computer (100) and the remote computer or computers (200), initializing a remote computing environment local client (107) on the local computer (100), establishing a connection between the remote computing environment local client (107) and a remote computing environment remote server (206) on the remote computer or computers (200), wherein the remote computing environment remote server (206) gives access to a remote virtual machine (202) housed in a remote hypervisor (201) on the remote computer or computers (200), and configuring a remote disk controller (203) on the remote computer or computers (200) for access by said remote virtual machine (202);
enabling a local disk controller (103) on the local computer (100), establishing a connection between the local disk controller (103) and the remote disk controller (203), and initiating data synchronization from the remote disk controller (203) to the local disk controller (103);
running a local virtual machine (102) housed in a local hypervisor (101) on the local computer (100), configuring said local virtual machine (102) to access the remote disk controller (203), migrating the remote virtual machine (202) to the local virtual machine (102), and connecting the remote computing environment local client (107) to a remote computing environment local server (106) that gives access to the local virtual machine (102);
when remote disk controller (203) and local disk controller (103) are synchronized, configuring said local virtual machine (102) to access local disk controller (103), and maintain local disk controller data synchronization (103) for the remote disk controller (203);
terminating connection between local disk controller (103) and remote disk controller (203), and terminating data connection between local computer (100) and remote computer or computers (200).

2. Method according to the preceding claim, further comprising configuring a boot controller (104) of the local computer (100) to restart the local computer (100) in a local computing environment, that is, without using the local hypervisor (101).

3. Method according to any one of the preceding claims, wherein the transition between said steps is at the user's initiative, the system's initiative or the user's initiative under system permission.

4. Method according to any one of the preceding claims, wherein the data synchronization from the remote disk controller (203) to the local disk controller (103) is performed in the background.

5. Method according to any one of the preceding claims, wherein the migration between the remote virtual machine (202) and the local virtual machine (102) is performed in the background.

6. Method according to any one of the preceding claims, wherein the transition of the remote computing environment local client (107) from the remote computing environment remote server (206), which gives access to the remote virtual machine (202), to the remote computing environment local server (106), which gives access to the local virtual machine (102), is performed on the foreground.

7. Method for gradually switching a user's computing environment between one or more remote computers (200) and a local computer (100) connected by a communication network (900), comprising the steps of:
running a local virtual machine (102) housed in a local hypervisor (101) on the local computer (100), configuring said local virtual machine (102) to access a local disk controller (103) on the local computer (100) and connecting a remote computing environment local client (107) on the local computer (100) to a remote computing environment local server (106) giving access to the local virtual machine (102);
running a remote virtual machine (202) housed in a remote hypervisor (201) on the remote computer or computers (200), and configuring said remote virtual machine (202) to access a remote disk controller (203) on the remote computer or computers (200) for access by said remote virtual machine (202);
establishing a data connection between the local computer (100) and the remote computer or computers (200), establishing a connection between the local disk controller (103) and the remote disk controller (203), and initiating data synchronization from the local disk controller (103) to remote disk controller (203); when remote disk controller (203) and local disk controller (103) are synchronized, configuring said local virtual machine (102) to access remote disk controller (203), and maintain local disk controller data synchronization (103) for the remote disk controller (203);
migrating the local virtual machine (102) to the remote virtual machine (202), and connecting the remote computing environment local client (107) to a remote computing environment remote server (206) gives access to the remote virtual machine (202).

8. Non-transient data storage medium comprising programming instructions for implementing a system for gradually switching a user's computing environment comprising a local computer (100) and one or more remote computers (200), wherein the programming instructions include executable instructions for executing the method according to any one of the preceding claims.

9. System for gradually switching a user's computing environment comprising a local computer (100) and one or more remote computers (200) to be connected by a communication network (900), configured to execute the method according to any one of claims 1-7, comprising:
a remote virtual machine (202) housed in a remote hypervisor (201) on the remote computer or computers (200);
a local virtual machine (102) housed in a local hypervisor (101) on the local computer (100);
a remote computing environment remote server (206) on the remote computer or computers (200) to access the remote virtual machine (202);
a remote computing environment local server (106) on the local computer (100) for accessing the local virtual machine (102);
a remote computing environment local client (107) on the local computer (100) to connect to the remote computing environment remote server (206) or the remote computing environment local server (106);
a remote disk controller (203) on the remote computer or computers (200) for access by said remote virtual machine (202) or by the local virtual machine (102);
a local disk controller (103) on the local computer (100) for access by the local virtual machine (102).

10. System according to the preceding claim comprising a boot controller (104) of the local computer (100) for restarting the local computer (100) in a local computing environment, that is, without recourse to the local hypervisor (101) or restarting the local computer (100) in a virtual computing environment, that is, using the local hypervisor (101) to run the local virtual machine (102).

11. System according to any one of claims 9-10, comprising a local agent and interface (110) for the user to control and display the gradual switching of computing environment between the local computer (100) and the remote computer or computers (200).

12. System according to the preceding claim, wherein the local agent and interface (110) comprise a computing environment interface (10), an operating mode control (13) for triggering user-controlled state changes, and a computing environment selector (11) for the userto choose the active and viewing computing environment.

13. System according to the preceding claim, wherein the local agent and interface (110) comprise an operating availability indicator (12) for informing on the state of data synchronization between the local disk controller (103) and the remote disk controller (203), and for informing on the state of migration between the remote virtual machine (202) and the local virtual machine (102).

14. System according to any one of claims 9-13, wherein the local disk controller (103) abstracts one or more storage devices from the local computer (100).

15. System according to any one of claims 9-14, wherein comprises a local network tunnel client (105) on the local computer (100) and a remote network tunnel server (205) on the remote computer or computers (200) to redirect data traffic from the remote computer or computers (200) to the local computer (100), by migrating a network address from the remote virtual machine (202) to the local virtual machine (102) when said network tunnel is active between the local network tunnel client (105) and the remote network tunnel server (205).
